# EUROPEAN PATENT SPECIFICATION

(11) **EP 1 053 711 B1**
(45) Date of publication and mention of the grant of the patent: **12.03.2003**
(21) Application number: 00110183.1
(22) Date of filing: 15.05.2000
(51) Int. Cl.: A47J 27/022, A47J 37/10

(54) **Cooking appliance with base suitable for supplying thermal energy by electromagnetic induction and conduction**
Kochgerät mit einem Boden geeignet für Erhitzung durch elektromagnetische Induktion und Konduktion
Dispositif de cuisson avec un fond apte à transférer de l'énergie thermique crée par induction ou conduction électromagnétique

(30) Priority: 21.05.1999 IT MI991119
(43) Date of publication of application: 22.11.2000
(73) Proprietor: LAGOSTINA S.p.A., 28026 Omegna, Verbania (IT)
(72) Inventor: Moroni, Vitaliano, 28883 Gravellona Toce, Verbania (IT)
(74) Representative: Petruzzelli, Antonio European Patent Attorney

(56) References cited:
- EP-A- 0 175 462
- EP-A- 0 677 264
- CH-A- 375 122
- DE-A- 4 412 943

## Description

The present invention relates to an appliance for cooking on an electric plate or on a gas hob adapted for the supply of thermal energy also by means of electromagnetic induction.

A cooking appliance has been known for some time which has a ferromagnetic base covering capable of heating by electromagnetic induction and thus transmitting the thermal energy to the base of the appliance and from there to the food to be cooked.

During use this appliance has shown a serious disadvantage represented by the high deformability of the base covering, due to the thermal gradients whereto the latter is cyclically subjected, which may modify, even considerably, the shape of the surface for resting on the cooking plate, causing serious problems of stability for the cooking appliance.

The deformation causes the moving away of the base from the cooking surface and this affects the efficiency of the appliance in terms of the thermal power supplied in relation to that generated by the electromagnetic induction plate.

In order to avoid this problem it has been proposed to open, on the base coverings, a series of cavities of various shapes and arrangement which, during attachment to the base, are partially or completely filled by the material forming the base itself.

The cavities serve to lighten the structure of the base covering, which is most responsible for the heat deformation caused on the base of the appliance during cooking on the induction plate.

The metal of the base covering also tends to block dilation of the softer metal of the base inserted in its cavities, and this contributes to limiting the overall deformation of the support surface of the cooking appliance.

In a traditional appliance of this type, even though it succeeds in limiting the deformations of thermal origin, the removal of ferromagnetic material from the base covering can jeopardise excessively the currents induced, responsible for its heating, thus lowering the efficiency of the appliance.

The material of the base of the appliance which occupies the cavities of the base covering is also usually less resistant to corrosion compared to the material of the base covering, and is thus exposed to greater oxidation.

The surface of resting of the appliance on the cooking plate may also have irregularities, particularly due to production systems which involve brazing of the base covering to the base of the cooking receptacle, given that the material of the base and the brazing product which rise into the cavities of the base covering do not always match the external surface of the base covering. Should however these materials be initially matched with the external surface of the base covering, their lower resistance to wear and to corrosion compared to the base covering in any case causes their more rapid thinning during use.

DE 4412943 discloses a cooking appliance for the supply of thermal energy through electromagnetic induction and conduction comprising a receptacle and a base covering equipped with apertures therethrough for reducing deformation of the base of the receptacle.

The object of the present invention is that of providing a cooking appliance for the supply of thermal energy through conduction, also adapted for the supply of thermal energy through electromagnetic induction which avoids the disadvantages suffered in traditional appliances, in particular one object is that of controlling the deformation and stability of the base without negatively influencing the efficiency of the appliance.

Another object of the present invention is that of ensuring suitable protection against wear and oxidation for the base of the appliance.

Yet another object of the present invention is that of providing a stably regular surface for support of the appliance on the cooking plate.

Yet a further object of the present invention is that of providing a structurally simple cooking appliance which requires an easy manufacturing process so as to be also less expensive.

Last but not least, an object of the present invention is that of providing a cooking appliance which also maintains an appreciable aesthetic effect.

These objects are achieved by the cooking appliance for the supply of thermal energy through electromagnetic induction and conduction of the present invention (cf. claim 1 and 3), which is of the type comprising a ferromagnetic base covering and base, wherein the base covering forms a surface for resting on the cooking plate having a predefined concavity, the appliance having the base covering with one or more cuts through its thickness, and being manufactured by adjusting the thickness of the base and base covering, and the shape and arrangement of the cuts, so as to reduce deformation of said support surface to a minimum.

To restrict the deforming action which the base covering exerts on the base of the appliance, unlike the technique traditionally used of lightening the base covering by creating thereon cavities by removing ferromagnetic material, with the present invention provision is made to weaken the base covering by forming thereon cuts of suitable shape, arrangement and quantity.

With the cuts of the base covering of the present invention, the quantity of ferromagnetic material responsible for heating the appliance remains unchanged and the efficiency of the appliance can therefore remain high.

The base covering moreover, even if varyingly cut, completely covers and protects the surface of the base of the appliance whereto it is attached, also creating a stably regular surface for resting on the cooking plate.

Given that the material of the base of the appliance is not left visible, an excellent aesthetic effect is also guaranteed.

These and other advantages will be made clearer on reading the following description of a preferred embodiment of the invention, with reference to the accompanying drawings, in which:
Fig. 1a shows a sectioned side view of a saucepan according to a preferred embodiment of the present invention, resting on the cooking plate.
Fig. 1b shows a plan view from above of the ferromagnetic base covering of the embodiment of Fig. 1a.
Fig. 2a shows a sectioned side view of a frying pan according to another preferred embodiment of the present invention, resting on the cooking plate;
Fig. 2b shows a plan view from above of the ferromagnetic base covering of the embodiment of Fig. 2a.
Fig. 3 shows a plan view from above of a ferromagnetic base covering according to another embodiment of the present invention.

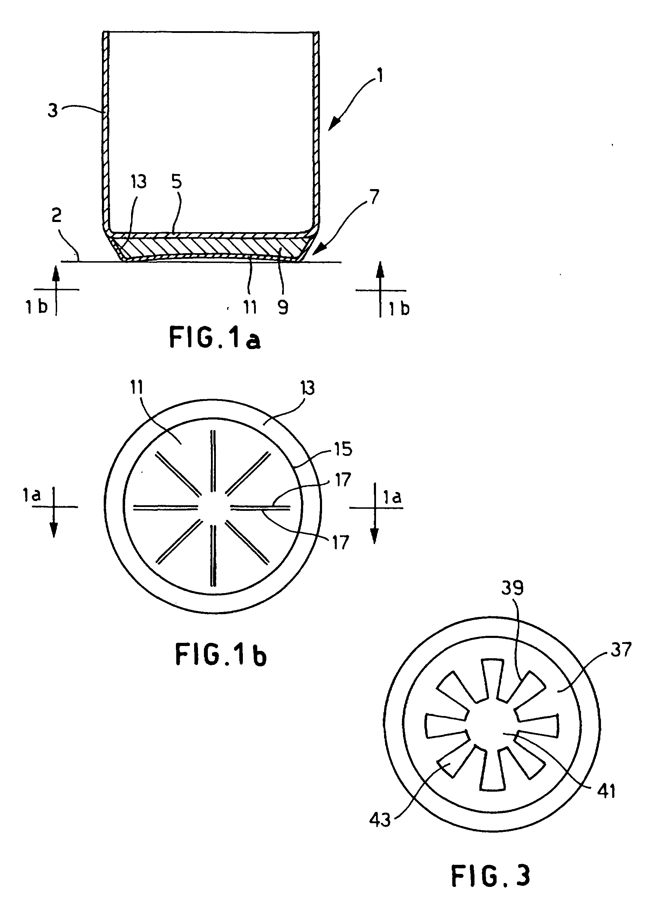

In Fig. 1a the cooking appliance resting on the induction cooking plate 2 is a saucepan comprising a receptacle 1 in AISI 304 austenitic steel with a circular plan formed by a side wall 3 and a circular base 5 of the receptacle.

The base 7 of the appliance is formed, from the top to the bottom, by the aforementioned base 5 of the receptacle 1 and by a heat conducting plate 9 in aluminium, and is covered on the lower side with a ferromagnetic base covering 11 in AISI 430 ferritic steel.

Naturally another material, suitable for cooking foods, could be used for the receptacle, another material for the plate which conducts heat well and another material for the base covering which maintains good ferromagnetic properties. The ferromagnetic base covering 11 is circular with a diameter substantially equal to that of the base 5 of the receptacle 1 and completely embraces the conducting plate 9 via a collar 13 which extends in one single piece from the peripheral circumference 15 of the base covering 11 and rests at the saucepan in the join area between the side wall 3 and the base 5 of the receptacle 1.

In order to simplify further the structure of the base of the appliance it would also be foreseeable to eliminate the collar, thus leaving only the side surface of the aluminium plate uncovered.

In Fig. 1b a series of pairs of cuts 17 is formed on the base covering 11.

Each pair of cuts 17 forms, on the base covering 11, a pair of parallel and adjacent straight lines, and is arranged in a radial section included between the centre and the circumference of the base covering 11.

The eight pairs of cuts 17 are angularly distanced one from the other by 45 degrees.

The base covering 11 is cut by inserting, from above in Fig. 1b, a mould through the whole thickness of the base covering 11 until it causes the complete detaching between the two lips forming each cut.

The process for manufacturing the cooking appliance involves a first phase of drawing the receptacle 1 so as to form the side wall 3 and the base 5 of the receptacle.

Later the conducting plate 9 and the base covering 11 are fixed onto the base 5 of the receptacle 1 by hot striking.

The collar 13 of the base covering 11 is preformed but can alternatively also be formed during hot striking, using a suitable mould.

The configuration of the base covering 11 of the present invention moreover makes attachment of the base of the appliance by brazing also suitable, wherein the welding alloy is restrained perfectly during welding between the touching surfaces of the base covering 11 and of the plate 9 on one side, and of the plate 9 and of the base 5 of the receptacle 1 on the other side.

The final phase consists of calibrating the curve, formed cold, of the surface for resting of the appliance on the cooking plate.

In order to quantify the improvements introduced by the present invention, we can, by way of an example, give some results of experiments.

We compared the behaviour, during cooking at 200°C in 3 cm of oil on an induction plate, of the appliance of the present embodiment, having a diameter of the base 5 of the receptacle 1 equal to 185 mm, thickness of the base 5 of the receptacle 1 equal to 1 mm, thickness of the plate 9 equal to 8 mm, thickness of the base covering 11 equal to 0.5 mm, with an appliance of identical size wherein the base covering has no cuts.

In both cases, starting from cold curving of the support surface of the appliance on the plate with a camber of 0.5 mm, after firing the camber of the resting surface of the appliance with base covering without cuts is increased by 0.92 mm, while that of the appliance of the aforesaid preferred embodiment of the present invention is increased by just 0.25 mm.

It is clear however that the extent of the deformation of the base of the appliance depends considerably on the diameter of the base and for this reason the thickness of the base of the receptacle, of the plate and of the base covering may be reduced for smaller diameters of the base and must be increased for greater diameters of the base.

Experimentally it has been found that, according to the chosen base diameter, the thickness of the base of the receptacle can be advantageously between 0.6 mm and 1.2 mm; the thickness of the plate between 4 mm and 10 mm; and the thickness of the base covering between 0.3 mm and 1 mm.

Clearly, in order to control deformation of the support surface of the cooking appliance resting on the plate, the variables to be optimised experimentally, in addition to the thickness of the base covering, the thickness of the conducting plate and the thickness of the base of the receptacle are the shape and arrangement of the cuts.

Clearly therefore the shape, arrangement and quantity of the cuts of the base covering, together with the thickness of the components of the base of the appliance, can differ from those illustrated hitherto even without departing from the more general principle of the present invention.

In particular the appliance has to provide a ferromagnetic base covering cut with a quantity of cuts sufficient for weakening the structure thereof to such an extent as to be no longer capable of causing considerable deformation to the base of the appliance, while, on a par with the combined length of all the cuts, arched and rectilinear shapes of the cut and circumferential and radial arrangements of the cuts in relation to the centre of the base covering were found to be effective.

The combined length of all the cuts, that is to say the quantity of cuts formed on the base covering, must also be chosen carefully in order to weaken the structure of the base covering without impairing the currents induced and responsible for heating of the appliance.

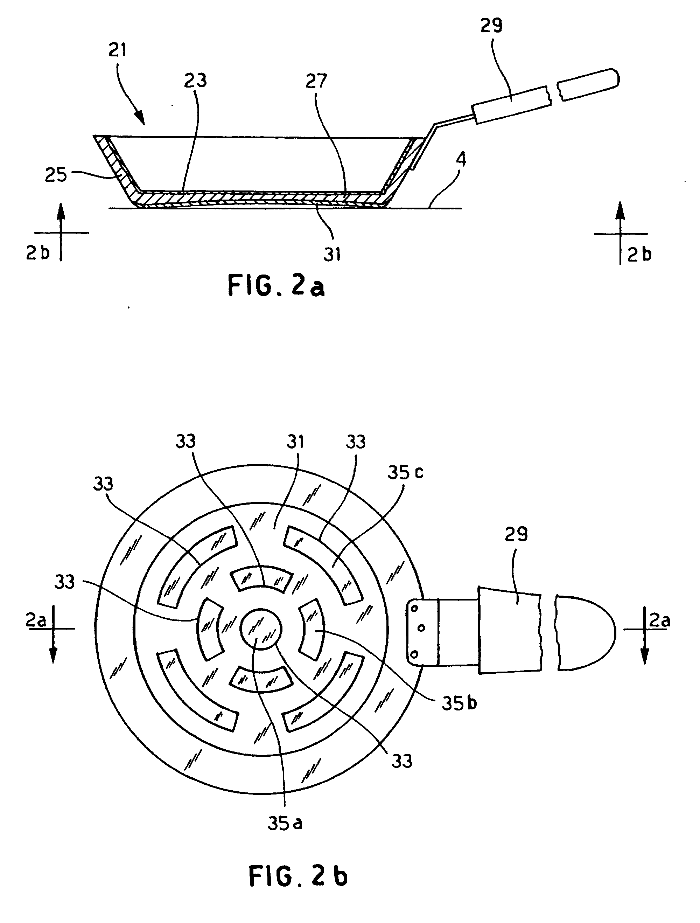

In Figs. 2a and 2b a frying pan according to a further embodiment of the present invention is illustrated.

The frying pan resting on the induction plate 4 comprises an aluminium receptacle 21 lined internally with a non-stick layer 23.

Optionally, the non-stick layer may also be excluded.

The receptacle 21 is drawn so as to define a side wall 25 and a base 27 of the receptacle, and also has a handle 29 and a ferromagnetic base covering 31 with cuts 33.

The surface of the frying pan resting on the cooking plate has a predefined cold curving.

The base 27 of the frying pan and the base covering are attached one to the other by hot striking or alternatively by brazing.

As can be seen above all in Fig. 2b, each cut 33 forms on the base covering 31 a closed line which physically separates the base covering 31 from each element 35a, 35b and 35c of base covering enclosed thereby.

The base covering 31 with the elements 35a, 35b and 35c restrained therein is attached to the base of the receptacle 27 by hot striking or brazing.

In the preferred embodiment illustrated, the base covering elements 31 comprise a circular element 35a centred in the centre of the base covering 31; outside of the circular element 35a a first series of four identical arched elements 35b, placed angularly equidistant along a circumference centred in the centre of the base covering 31; and outside of the first a second series of four identical arched elements 35c arranged angularly equidistant along a circumference centred in the centre of the base covering 31 and offset angularly through 45 degrees in relation to the elements 35b.

Shapes of the cuts which define a radial distribution of the base covering elements in relation to the centre of the base covering have proved equally effective in this case too.

It has been found in experiments that, according to the diameter of the base of the frying pan, the thickness of the base of the receptacle may vary between 3 mm and 7 mm, and the thickness of the base covering between 0.3 mm and 1 mm.

In Fig. 3 another embodiment of a base covering in accordance with the present invention is illustrated, which can be adapted, irrespective, like moreover the base coverings of the aforesaid embodiments, to the base of both a saucepan and of a frying pan.

Shearing of the base covering 37 forms a single shaped cut 39 comprising rectilinear sections and arched sections.

The shaped cut 39 defines a circular portion of base covering 41, centred in the centre of the base cover 37, from whose peripheral circumference eight radial sectors 43, angularly equidistant, extend.

The cooking appliance provided with the present invention can thus advantageously be used both for cooking on a gas hob or on an electric plate, or for cooking on an induction plate.

## Claims

1. Cooking appliance for the supply of thermal energy through electromagnetic induction and conduction, in the form of a saucepan comprising: a receptacle (1) in turn comprising a side wall (3) and a base (5) of the receptacle (1), a base covering (11) in ferromagnetic material having a surface for resting on the cooking plate with a predefined cold curving; a conduction plate (9) in a highly heat conductive material inserted between the base covering (11) and the base (5) of the receptacle (1); eventually a collar (13) attached to the conducting plate (9), which collar (13) extends in one single part from the circumference of the base covering (11) as far as the zone of the join between the side wall (3) and the base (5) of the receptacle (1); and one or more cuts (17) through the thickness of said solid base covering (11); said appliance being formed by adjusting the thickness of the base covering (11), the thickness of the conducting plate (9), the thickness of the base (5) of the receptacle (1), and the shape, arrangement and quantity of the cuts (17), in such a way as to reduce deformation of said surface for resting on the cooking plate to a minimum; **characterized in that** the lips of each cut (17) of the base covering (11) are substantially set one against to the other.

2. Cooking appliance for the supply of thermal energy through electromagnetic induction and conduction according to the previous claim,
**characterised in that** the thickness of the base (5) of the receptacle (1) is between 0.6 mm and 1.2 mm, the thickness of the plate (9) is between 4 mm and 10 mm, and the thickness of the solid base covering (11) between 0.3 mm and 1 mm.

3. Cooking appliance for the supply of thermal energy through electromagnetic induction and conduction, in the form of a frying pan comprising: a receptacle (21) in turn comprising a side wall (25) and a base (27) of the receptacle (21); eventually a non-stick layer (23) for covering the internal of the receptacle (21); a base covering (31) in a ferromagnetic material having a surface for resting on the cooking plate with a predefined cold curving; one or more cuts (33) through the thickness of the base covering (31) said appliance being formed by adjusting the thickness of the base covering (31), the thickness of the base (27) of the receptacle (21), and the shape, arrangement and quantity of cuts (33), in such a way as to reduce deformation of said surface for resting on the cooking plate to a minimum; **characterised in that** the lips of each cut (33) of the base covering (31) are substantially set one against to the other.

4. Cooking appliance for the supply of thermal energy through electromagnetic induction and conduction according to the previous claim, **characterised in that** the thickness of the base (27) of the receptacle (21) is between 3 mm and 7 mm, and the thickness of the solid base covering (31) is between 0.3 mm and 1 mm.

5. Cooking appliance for the supply of thermal energy through electromagnetic induction and conduction according to any one of the previous claims, **characterised in that** said one or more cuts (17, 33, 39) are arranged radially or circumferentially in relation to the centre of the solid base covering (11,31).

6. Cooking appliance for the supply of thermal energy through electromagnetic induction and conduction according to any one of the previous claims, **characterised in that** said one or more cuts (17, 33, 39) have the shape of a straight or arched line or comprising rectilinear or arched sections.

7. Cooking appliance for the supply of thermal energy through electromagnetic induction and conduction according to the previous claim, **characterised in that** said one or more cuts define a closed line.

8. Cooking appliance for the supply of thermal energy through electromagnetic induction and conduction according to claims 5 and 6, **characterised in that** said solid covering base (11) comprises eight pairs of cuts (17, 17) distributed radially in relation to the centre of the solid base covering (17) and angularly equidistant, and **in that** each pair of cuts (17, 17) forms on the solid base covering (11) a pair of parallel and adjacent straight lines.

9. Cooking appliance for the supply of thermal energy through electromagnetic induction and conduction according to claims 5 to 7, **characterised in that** said solid covering base (31) provides one cut (33) defining a first circular base covering element (35a) centred on the centre of the base covering (31), outside of said first element (35a) a first series of four equal arched element (35b) arranged angularly equidistant along a circumference centred in the centre of the solid base covering (31), and outside of said first series a second series of four equal arched elements (35c) arranged angularly equidistant along a circumference centred in the centre of the solid base covering (31), said second series being offset angularly by (45) degrees in relation to said first series.

10. Cooking appliance for the supply of thermal energy through electromagnetic induction according to claims 5 to 7, **characterised in that** said solid base covering provides a single cut (39) defining a circular base covering portion (41) centred at the centre of the base covering (37) and eight radial and angularly equidistant sectors (43) extending from the peripheral circumference of said circular portion (41).

11. Cooking appliance for the supply of thermal energy through electromagnetic induction according to any one of the previous claims, **characterised in that** the base (7, 27) of the appliance and the solid base covering (11, 31, 37) are attached one to the other by hot striking.

12. Cooking appliance for the supply of thermal energy through electromagnetic induction according to any claim from 1 to 10, **characterised in that** the base (7, 27) of the appliance and the solid base covering (11, 31, 37) are attached one to the other by brazing.

## Patentansprüche

1. Kochgerät zur Lieferung von Wärmeenergie durch elektromagnetische Induktion und Konduktion in Form einer Kasserolle, die ein Behältnis (1) umfaßt, das jeweils eine Seitenwand (3) und einen Boden (5) des Behältnisses umfaßt; eine Bodenbeschichtung (11) aus ferromagnetischem Material zum Aufliegen auf der Kochplatte mit vorbestimmter Kaltkrümmung; eine Konduktionsplatte (9) aus einem hochgradig wärmeleitenden Material, die zwischen die Bodenbeschichtung (11) und den Boden (5) des Behältnisses (1) eingesetzt ist; eventuell einen Bund (13), der an der Konduktionsplatte (9) befestigt ist, wobei dieser Bund (13) sich einteilig von der Peripherie der Bodenbeschichtung (11) bis zum Bereich der Verbindung zwischen der Seitenwand (3) und dem Boden (5) des Behältnisses (1) erstreckt; und einen oder mehrere Schnitte (17) durch die Stärke der genannten Bodenbeschichtung (11); wobei das genannte Gerät durch Justierung der Stärke der Bodenbeschichtung (11), der Stärke der Konduktionsplatte (9), der Stärke des Bodens (5) des Behältnisses (1) und der Form, Anordnung und Anzahl der Schnitte (17) gebildet wird, und zwar so, daß die Verformung der genannten Oberfläche zum Aufliegen auf der Kochplatte auf ein Mindestmaß reduziert wird; **dadurch gekennzeichnet, daß** die Kanten jedes Schnitt (17) der Bodenbeschichtung (11) im wesentlichen gegeneinander gesetzt sind.

2. Kochgerät zur Lieferung von Wärmeenergie durch elektromagnetische Induktion und Konduktion gemäß dem vorausgegangenen Anspruch, **dadurch gekennzeichnet, daß** die Stärke des Bodens (5) des Behältnisses (1) zwischen 0,6 mm und 1,2 mm, die Stärke der Platte (9) zwischen 4 mm und 10 mm und die Stärke der Bodenbeschichtung (11) zwischen 0,3 mm und 1 mm liegt.

3. Kochgerät zur Lieferung von Wärmeenergie durch elektromagnetische Induktion und Konduktion in Form einer Bratpfanne, die folgendes umfaßt: ein Behältnis (21), das jeweils eine Seitenwand (25) und einen Boden (27) des Behältnisses (21) umfaßt; eventuell einen Antifhaft-Belag (23) zur Auskleidung des Inneren des Behältnisses (21); eine Bodenbeschichtung (31) aus ferromagnetischem Material mit einer Oberfläche zur Auflage auf die Kochplatte mit einer vorbestimmten Kaltkrümmung; einen oder mehrere Schnitte (33) durch die Stärke der Bodenbeschichtung (31); wobei das genannte Gerät durch Anpassung der Stärke der Bodenbeschichtung (31), der Stärke des Bodens (27) des Gefäßes (21) und der Form, Anordnung und Anzahl der Schnitte (33) gebildet wird, und zwar so, daß die Verformung der genannten Fläche zur Auflage auf die Kochplatte auf ein Mindestmaß reduziert wird; **dadurch gekennzeichnet, daß** die Kanten jedes Schnitts (33) der Bodenbeschichtung (31) im wesentlichen gegeneinander gesetzt sind.

4. Ein Kochgerät zur Lieferung von Wärmeenergie durch elektromagnetische Induktion und Konduktion gemäß dem vorausgegangenen Anspruch, **dadurch gekennzeichnet, daß** die Stärke des Bodens (27) des Gefäßes (21) zwischen 3 mm und 7 mm liegt, und die Stärke der Bodenbeschichtung (31) zwischen 0,3 mm und 1 mm liegt.

5. Ein Kochgerät zur Lieferung von Wärmeenergie durch elektromagnetische Induktion und Konduktion gemäß einem beliebigen der vorausgegangenen Ansprüche, **dadurch gekennzeichnet, daß** der genannte eine Schnitt oder die genannten mehreren Schnitte (17, 33, 39) radial oder peripherisch in Bezug auf die Mitte der Bodenbeschichtung (11, 31) angeordnet sind.

6. Ein Kochgerät zur Lieferung von Wärmeenergie durch elektromagnetische Induktion und Konduktion gemäß einem beliebigen der vorausgegangenen Ansprüche, **dadurch gekennzeichnet, daß** der genannte eine Schnitt oder die genannten mehreren Schnitte (17, 33, 39) die Form einer geraden oder gebogenen Linie bzw. geradlinige oder gebogene Abschnitte aufweisen.

7. Ein Kochgerät zur Lieferung von Wärmeenergie durch elektromagnetische Induktion und Konduktion gemäß dem vorausgegangenen Anspruch, **dadurch gekennzeichnet, daß** der genannte eine Schnitt oder die genannten mehreren Schnitte eine geschlossenen Linie bilden.

8. Ein Kochgerät zur Lieferung von Wärmeenergie durch elektromagnetische Induktion und Konduktion gemäß den Ansprüchen 5 und 6, **dadurch gekennzeichnet, daß** die genannte Bodenbeschichtung (11) acht Paar Schnitte (17, 17) umfaßt, die radial in Bezug auf die Mitte der Bodenbeschichtung (17) angeordnet und winklig abstandsgleich sind, sowie dadurch, daß jedes Paar Schnitte (17, 17) auf der Bodenbeschichtung (11) jeweils ein Paar parallele und anliegende gerade Linien bildet.

9. Ein Kochgerät zur Lieferung von Wärmeenergie durch elektromagnetische Induktion und Konduktion gemäß den Ansprüchen 5 bis 7, **dadurch gekennzeichnet, daß** die genannte Bodenbeschichtung (31) einen Schnitt (33) aufweist, der ein erstes kreisförmiges Bodenbeschichtungselement (35a) bildet, das in der Mitte der Bodenbeschichtung (31) zentriert ist, außerhalb des genannten ersten Elementes (35a) eine erste Reihe von vier gleichen gebogenen Elementen (35b), die winklig abstandsgleich entlang einer Peripherie angeordnet sind, welche in der Mitte der Bodenbeschichtung (31) zentriert ist, und außerhalb dieser genannten ersten Reihe eine zweite Reihe von vier gleichen gebogenen Elementen (35c), die winklig abstandsgleich entlang einer Peripherie angeordnet sind, welche in der Mitte der Bodenbeschichtung (31) zentriert ist, wobei die genannte zweite Reihe winklig um (45) Grad in Bezug auf die genannte erste Reihe versetzt ist.

10. Ein Kochgerät zur Lieferung von Wärmeenergie durch elektromagnetische Induktion gemäß den Ansprüchen 5 bis 7, **dadurch gekennzeichnet, daß** die genannte Bodenbeschichtung einen einzigen Schnitt (39) aufweist, der einen kreisförmigen Bodenbeschichtungsabschnitt (41) bildet, welcher in der Mitte der Bodenbeschichtung (37) zentriert ist, und acht radiale und winklig abstandsgleiche Sektoren (43), die sich vom peripherischen Umfang des genannten kreisförmigen Abschnitts (41) erstrecken.

11. Ein Kochgerät zur Lieferung von Wärmeenergie durch elektromagnetische Induktion gemäß einem beliebigen der vorausgegangenen Ansprüche, **dadurch gekennzeichnet, daß** der Boden (7, 27) des Geräts und die Bodenbeschichtung (11, 31, 37) mittels Gesenkschmiedeverfahren miteinander verbunden sind.

12. Ein Kochgerät zur Lieferung von Wärmeenergie durch elektromagnetische Induktion gemäß einem beliebigen der Ansprüche von 1 bis 10, **dadurch gekennzeichnet, daß** der Boden (7, 27) des Geräts und die Bodenbeschichtung (11, 31, 37) durch Hartlötverfahren miteinander verbunden sind.

## Revendications

1. Dispositif de cuisson apte à transférer de l'énergie thermique créée par induction et conduction électromagnétique, sous forme d'une casserole comprenant: un récipient (1) comprenant à son tour une paroi latérale (3) et un fond (5) du récipient (1), une couverture du fond (11) de matière ferromagnétique ayant une surface pour appuyer sur la plaque de cuisson avec une courbe à froid prédéfinie; une plaque de conduction (9) dans une matière à haute conductibilité de chaleur insérée entre la couverture du fond (11) et le fond (5) du récipient (1); en définitive un collier (13) attaché à la plaque de conduction (9) lequel collier (13) s'étend en une partie unique de la circonférence de la couverture du fond (11) jusqu'à la zone de la jonction entre la paroi latérale (3) et le fond (5) du récipient (1); et une ou plusieurs fentes (17) à travers l'épaisseur de ladite couverture du fond solide (11); ledit dispositif étant formé en réglant l'épaisseur de la couverture du fond (11), l'épaisseur de la plaque de conduction (9), l'épaisseur du fond (5) du récipient (1) et la forme, la disposition et la quantité des fentes (17) de manière à réduire la déformation de ladite surface pour l'appui sur la plaque de cuisson au minimum; **caractérisé par le fait que** les bords de chaque fente (17) de la couverture du fond (11) sont essentiellement disposés l'un contre l'autre.

2. Dispositif de cuisson apte à transférer de l'énergie thermique créée par induction et conduction électromagnétique, conformément à la revendication précédente, **caractérisé par le fait que** l'épaisseur du fond (5) du récipient (1) est comprise entre 0.6 mm et 1.2 mm, l'épaisseur de la plaque (9) est comprise entre 4 mm et 10 mm et l'épaisseur de la couverture du fond solide (11) entre 0.3 mm et 1 mm.

3. Dispositif de cuisson apte à transférer de l'énergie thermique créée par induction et conduction électromagnétique, sous forme d'une poêle à frire comprenant: un récipient (21) à son tour comprenant une paroi (25) et un fond (27) du récipient (21) ; en définitive une couche anti-adhésive (23) pour couvrir l'intérieur du récipient (21); une couverture du fond (31) de matière ferromagnétique ayant une surface pour appuyer sur la plaque de cuisson avec une courbe à froid prédéterminée; une ou plusieurs fentes (33) à travers l'épaisseur de la couverture du fond (31); ledit dispositif étant formé en réglant l'épaisseur de la couverture du fond (31), l'épaisseur du fond (27) du récipient (21) et la forme, la disposition et la quantité des fentes (33) de manière à réduire la déformation de ladite surface d'appui sur la plaque de cuisson au minimum; **caractérisé par le fait que** les bords de chaque fente (33) de la couverture du fond (31) sont essentiellement disposés l'un contre l'autre.

4. Dispositif de cuisson apte à transférer de l'énergie thermique créée par induction et conduction électromagnétique conformément à la revendication précédente, **caractérisé par le fait que** l'épaisseur du fond (27) du récipient (21) est comprise entre 3 mm et 7 mm, et que l'épaisseur de la couverture du fond solide (31) est comprise entre 0.3 mm et 1 mm.

5. Dispositif de cuisson apte à transférer de l'énergie thermique créée par induction et conduction électromagnétique, conformément à n'importe laquelle des revendications précédentes, **caractérisé par le fait que** lesdites une ou plusieurs fentes (17, 33, 39) sont disposées de façon radiale ou sur la circonférence par rapport au centre de la couverture du fond solide (11, 31).

6. Dispositif de cuisson apte à transférer de l'énergie thermique créée par induction et conduction électromagnétique conformément à n'importe laquelle des revendications précédentes, **caractérisé par le fait que** lesdites une ou plusieurs fentes (17, 33, 39) ont la forme d'une ligne droite ou arquée ou comprenant des sections rectilignes ou arquées.

7. Dispositif de cuisson apte à transférer de l'énergie thermique créée par induction et conduction électromagnétique conformément à la revendication précédente, **caractérisé par le fait que** lesdites une ou plusieurs fentes définissent une ligne fermée.

8. Dispositif de cuisson apte à transférer de l'énergie thermique créée par induction et conduction électromagnétique conformément aux revendications 5 et 6, **caractérisé par le fait que** ladite couverture du fond solide (11) comprend huit paires de fentes (17, 17) distribuées de façon radiale par rapport au centre de la couverture du fond solide (17) et angulairement équidistantes, et **par le fait que** chaque paire de fentes (17, 17) forme sur la couverture du fond solide (11) une paire de lignes droites parallèles et adjacentes.

9. Dispositif de cuisson apte à transférer de l'énergie thermique créée par induction et conduction électromagnétique, conformément aux revendications de 5 à 7, **caractérisé par le fait que** la couverture du fond solide (31) présente une fente (33) définissant un premier élément de couverture du fond circulaire (35a) centré au centre de la couverture du fond (31), à l'extérieur dudit premier élément (35a) une première série de quatre éléments arqués égaux (35b) disposés de manière angulaire équidistante le long de la circonférence, centrés au centre de la couverture du fond solide (31), et à l'extérieur de ladite première série une seconde série de quatre éléments arqués égaux (35c) disposés de manière angulaire équidistante le long d'une circonférence centrée au centre de la couverture du fond solide (31), ladite seconde série étant déportée angulairement de (45) degrés par rapport à ladite première série.

10. Dispositif de cuisson apte à transférer de l'énergie thermique créée par induction et conduction électromagnétique, conformément aux revendications de 5 à 7, **caractérisé par le fait que** ladite couverture du fond solide présente une unique fente (39) définissant une portion de couverture du fond circulaire (41) centrée au centre de la couverture du fond (37) et huit secteurs radiaux et angulairement équidistants (43) s'étendant de la circonférence périphérique de ladite portion circulaire (41).

11. Dispositif de cuisson apte à transférer de l'énergie thermique créée par induction et conduction électromagnétique conformément à n'importe laquelle des revendications précédentes, **caractérisé par le fait que** le fond (7, 27) du dispositif et la couverture du fond solide (11, 31, 37) sont attachés les uns aux autres par frappe à chaud.

12. Dispositif de cuisson apte à transférer de l'énergie thermique créée par induction et conduction électromagnétique conformément à une quelconque de revendications de 1 à 10, **caractérisé par le fait que** le fond (7, 27) du dispositif et la couverture du fond solide (11, 31, 37) sont attachées les unes aux autres par brasage.
